(19) Europäisches Patentamt

European Patent Office

Office européen des brevets

(11) **EP 1 125 722 A2**

(12) **DEMANDE DE BREVET EUROPEEN**

(43) Date de publication:
**22.08.2001 Bulletin 2001/34**

(51) Int Cl.⁷: **B29C 65/34**

(21) Numéro de dépôt: **01400209.1**

(22) Date de dépôt: **26.01.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **28.01.2000 FR 0001117**

(71) Demandeur: **SOCIETE JOSEPH SAURON MATERIEL INDUSTRIEL**
**91070 Bondoufle (FR)**

(72) Inventeurs:
• **Sauron, Jean M.**
 **91210 Draveil (FR)**
• **Gaunt, Gil M.**
 **77310 Saint-Fargeau-Ponthierry (FR)**

(74) Mandataire: **Lerner, François**
 **Lerner & Associés,**
 **5, rue Jules Lefèbvre**
 **75009 Paris (FR)**

(54) **Dispositif d'électro-soudage à signal de sortie régulé**

(57) Le dispositif d'électro-soudage comprend des moyens (32) pour générer un signal électrique et faire circuler un courant AC, un convertisseur AC/DC (29), un élément chauffant (6) relié au convertisseur pour porter localement les pièces à une température suffisante pour induire leur soudage par fusion.

1. Selon l'invention, entre le convertisseur (29) et l'élément chauffant (6) sont interposés des moyens régulateurs (37) soumis à la cadence de commutation d'un commutateur pour générer un signal électrique commuté avec un rapport cyclique ($\alpha$) adaptable, tel que

$$\alpha = \frac{U_{DC}^2}{U_{RMS}^2}$$

et $\alpha = \frac{t_2}{t_1+t_2}$ avec $U_{DC}$ : tension électrique "d'entrée" des moyens régulateur, correspondant à un courant DC, $U_{RMS}$ : tension électrique variable "de sortie" des moyens régulateur correspondant au courant délivré vers l'élément chauffant, $t_1$ = durée de chaque phase non passante du commutateur, $t_2$ = durée de chaque phase passante du commutateur .

FIG.2

EP 1 125 722 A2

**Description**

L'invention concerne le domaine de l'électro-soudage, également appelé électro-fusion, afin de souder ensemble au moins deux pièces en matière plastique, et en particulier thermoplastique.

On connaît déjà de tels dispositifs ou appareils d'électro-soudage comprenant :

- des moyens pour générer un signal électrique et faire circuler un courant AC,
- un convertisseur AC/DC,
- un élément chauffant ayant une liaison avec le convertisseur pour porter la pièce, au moins localement, à une température suffisante pour induire leur soudage par fusion.

Un tel dispositif est notamment décrit dans FR-A-2 572 326 ou US-A-5138136.

Les appareils connus de l'art antérieur ne permettent toutefois pas d'adapter suffisamment efficacement leurs conditions de fonctionnement aux situations réelles rencontrées, en particulier les conditions de température.

Un problème se pose également pour l'adaptation des appareils de soudage aux différents types de pièces à souder que l'on rencontre typiquement : résistance électrique (telle qu'une résistance électrique disposée dans un raccord d'électro-soudage en matière plastique), ou éléments chauffants adaptés pour être chauffés par induction.

Un problème que vise également à résoudre l'invention concerne la possibilité de faire fonctionner le dispositif sur batterie (courant continu ou unidirectionnel/DC) comme un "inverteur" ou comme un appareil de soudage par induction.

Afin d'améliorer donc les conditions de fonctionnement des appareils existants et dans le but de répondre au moins pour partie aux problèmes évoqués ci-avant, une caractéristique importante de l'invention prévoit qu'entre le convertisseur de l'appareil et l'élément chauffant soient interposés des moyens régulateurs soumis à la cadence de commutation d'un commutateur pour générer un signal électrique commuté avec un rapport cyclique ($\alpha$) adaptable tel que

$$\alpha = \frac{U_{RMS}^2}{U_{DC}^2} \text{ et } \alpha = \frac{t_2}{t_1 + t_2} \ ,$$

avec :

$U_{DC}$ : tension électrique "d'entrée" des moyens régulateur (établie juste en amont de la régulation),
$U_{RMS}$ : tension électrique variable "de sortie" des moyens régulateur correspondant au courant délivré vers l'élément chauffant,
$t_1$ = durée de chaque phase non passante du commutateur,

$t_2$ = durée de chaque phase passante du commutateur.

Pour élargir les conditions d'application du dispositif de l'invention et éviter les problèmes d'irrégularités d'alimentation en énergie électrique susceptibles de survenir sur le terrain, une caractéristique complémentaire de l'invention prévoit qu'un accumulateur soit interposé entre la sortie DC du convertisseur et les moyens régulateurs.

En outre, pour une efficacité et une fiabilité accrue de l'électro-soudage (rapidité, respect de la température ...) lors de la phase de fusion, une autre caractéristique de l'invention recommande que la tension électrique variable "de sortie" des moyens régulateur est une tension en créneaux, s'annulant périodiquement, à chaque phase non passante ($t_1$) du commutateur.

Par ailleurs, en particulier pour satisfaire aux conditions de fonctionnement du dispositif de l'invention en tant qu'appareil de chauffage par induction, une autre caractéristique de l'invention prévoit que la cadence (période) $\delta$ de commutation des moyens de cadencement puisse être variable, de manière à rendre ainsi variable la fréquence du signal électrique commuté délivré vers l'élément chauffant, rendant ainsi variable la fréquence de chauffage.

Une description plus détaillée de l'invention va maintenant être fournie en référence aux dessins annexés dans lesquels :

la figure 1 montre schématiquement une machine d'électro-soudage ayant une liaison filaire avec l'élément chauffant d'un raccord pour le soudage de deux tubes plastiques,
la figure 2 montre des détails internes de réalisation de la machine d'électro-soudage,
la figure 3 détaille encore une possible réalisation de l'étage de conversion AC/DC,
la figure 4 détaille une possible réalisation d'un transistor à effet de champs de l'étage de commutation/régulation,
et la figure 5 illustre schématiquement une courbe de tension de sortie ($U_{RMS}$) vers l'élément chauffant, en fonction du temps (t).

Dans ce qui suit, on ne fera référence à titre d'exemple non limitatif qu'au cas du soudage entre elles de deux conduites, par l'intermédiaire d'un manchon.

L'application s'applique bien entendu toutefois à d'autres cas de figure, tels par exemple qu'une liaison par fusion à l'aide d'une selle de branchement ....

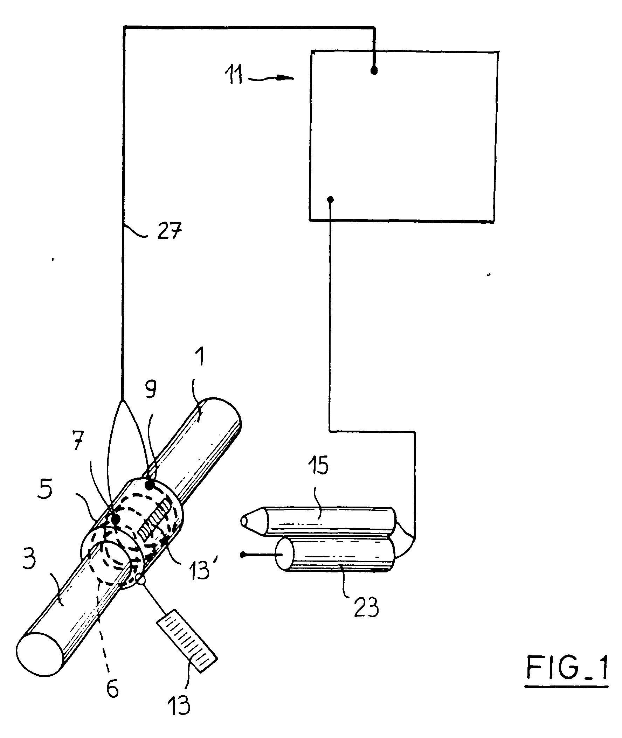

Sur la figure 1, on a ainsi montré schématiquement deux éléments de conduite 1, 3, en matière plastique, par exemple du polyéthylène, devant être réunis au moyen d'un manchon 5 également en polyéthylène prévu pour être thermo-soudé autour des extrémités des éléments 1, 3, sensiblement aboutés et disposés ici coaxialement.

En l'espèce, le manchon 5 comprend un bobinage électrique 6 au voisinage de sa paroi intérieure. Les extrémités de cette résistance électrique sont accessibles par les deux bornes 7, 9 d'alimentation électrique.

De façon connue, le thermo-soudage du manchon 5 autour des tubes 1, 3 s'effectue en faisant passer entre les bornes 7, 9 une énergie électrique déterminée, pendant une durée également déterminée, ce pour obtenir une montée en température convenable à la réalisation du soudage entre les éléments 1, 3, 5.

En particulier, ces données dépendent du diamètre de l'accessoire 5, de l'épaisseur de ses parois, de la résistance du bobinage, de la longueur de ce manchon, de la qualité de la matière plastique, etc.

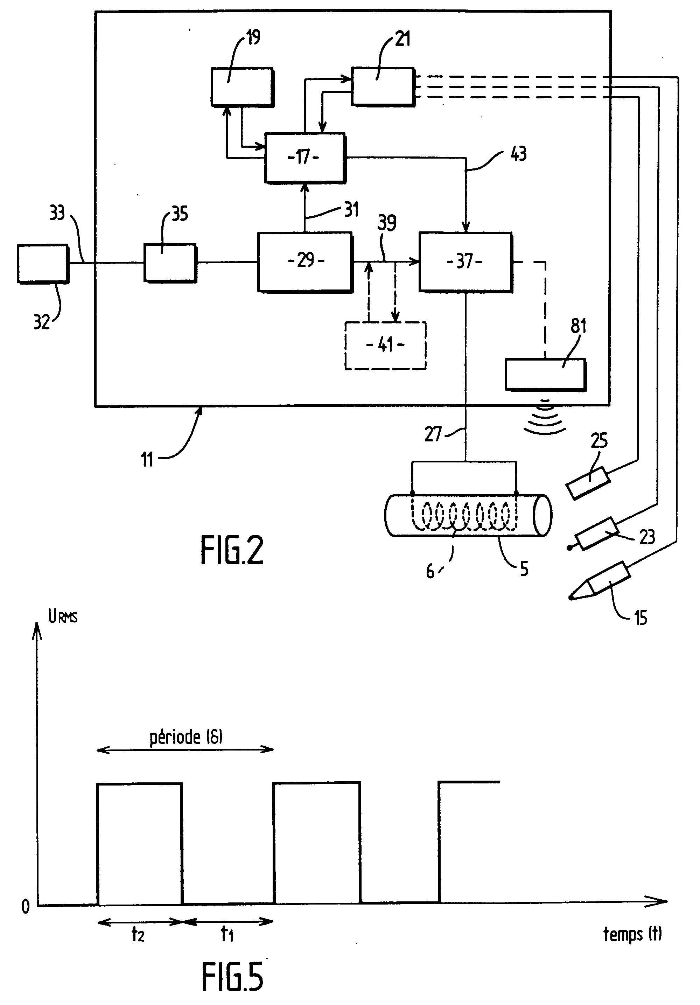

Comme déjà décrit dans FR-A-2 572 326, ces paramètres qui dictent les conditions d'exécution du programme de soudure dans la machine 11 (c'est-à-dire essentiellement la durée et une quantité électrique : énergie, puissance, intensité et/ou tension devant être délivrée vers la résistance électrique), sont indiquées sur une plaque d'identification telle que 13 ou 13' (voir figure 2). Il peut s'agir d'une carte code à barres, d'un code magnétique, d'une puce électronique ...

S'il s'agit d'une étiquette fixement solidaire des éléments ou de l'accessoire 5, cette étiquette est adaptée pour être lue, par exemple par un crayon optique 15, lequel est relié à la machine 11 pour fournir à la carte électronique 17 les données lues.

Une telle carte électronique, traditionnelle en soi, gère ainsi, sur la machine 11, l'interface avec l'opérateur, par l'intermédiaire de l'écran 19 et du clavier 21, ainsi que l'acquisition automatique des données du lecteur 15. La carte 17 mémorise et commande également les sorties de communication (parallèle, série ...).

La carte 17 stocke et traite en outre les données qui peuvent être issues d'une sonde de température, telle que celle schématisée en 23, et qui peut fournir des mesures de température des pièces et/ou de la température ambiante, laquelle peut conditionner les conditions de soudage (variations de la "quantité" électrique délivrée et/ou de la durée de cette alimentation, en particulier).

Si une mesure ohmique de l'accessoire 5 à souder est souhaitée, comme évoqué dans FR-A-2 609 933, cette donnée de mesure est stockée et traitée dans la carte, laquelle calcule également (et fournit vers l'accessoire 5, via le câble 27) la tension et/ou le courant et/ou l'énergie et/ou la puissance électrique, ainsi que le temps et la fréquence de soudage utiles pour la réunion des pièces 1, 3.

Outre la carte 17, la machine 11 comprend également un convertisseur AC/DC 29 qui gère l'alimentation électronique de la carte 17, via la ligne 31.

Le convertisseur 29 reçoit d'une source 32 d'alimentation appropriée génératrice de chantier par exemple, une tension d'alimentation primaire alternative (courant alternatif, AC) 33, au travers d'un commutateur marche/arrêt 35 intégrant typiquement des moyens 11 de protection de la machine.

Conformément à l'invention, le convertisseur AC/DC 29 est également relié à un circuit électronique 37 de commutation auquel il délivre un signal électrique continu (ou du moins unidirectionnel redressé : DC) tel en particulier qu'une tension, à travers la ligne 39.

Sur cette ligne 39 peut être branché en parallèle un accumulateur 41 qui permet alors de faire fonctionner la machine de soudage en mode "batterie" (avec stockage en 41 de l'énergie électrique, prête ainsi à être restituée sous forme de courant DC).

Le circuit de commutation 37 est par ailleurs commandé par la carte électronique 17 qui délivre vers lui les consignes de régulation du signal électrique à délivrer vers l'accessoire 5. Ces consignes de régulation ont été calculées par la carte 17, en fonction du signal électrique délivré dans la ligne 39 (lequel dépend du signal transmis dans la ligne 31), des mesures effectuées par la(les) sondes (mesures de température, mesures ohmiques ...) ainsi que du calcul interne électrique dont on a déjà parlé (tension et/ou courant et/ou énergie et/ou puissance) mené concomitamment au calcul du temps et de la fréquence de soudage à délivrer vers l'accessoire.

Le circuit de commutation 37 reçoit donc de la ligne 39 le signal électrique d'entrée qu'il doit périodiquement permuter/réguler sur la base des consignes de commutation/régulation fournies par la liaison 43, sous la commande de la carte électronique 17.

Le signal électrique commuté/régulé est ensuite transmis par la ligne de connexion 27 vers l'accessoire 5.

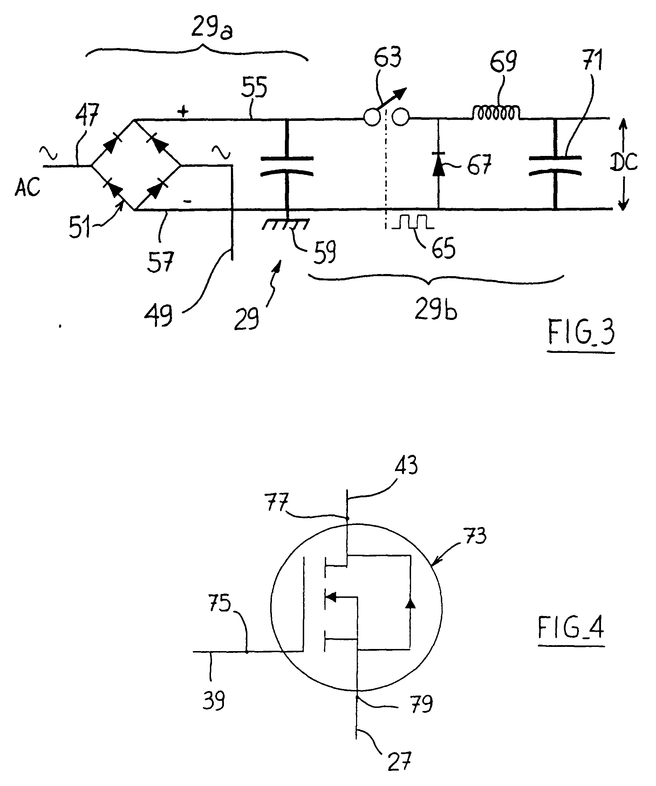

Le convertisseur AC/DC 29 peut être constitué de la manière illustrée sur la figure 3, avec en entrée une première partie "redresseur" 29a suivie d'une seconde partie "abaisseur" 29b.

Le signal AC d'entrée transmis en 47 et 49 traverse un pont de diodes repéré dans son ensemble 51. En sortie du pont 51, une capacité 53 est branchée en parallèle, entre les lignes de pôles respectivement positif (+) 55 et négatif (-) 57 (la masse étant symbolisée en 59). Sortant du redresseur, le signal redressé passe donc dans un abaisseur (limiteur de tension) 29b comprenant un interrupteur on/off (passant/non passant) 73 permettant de sortir le signal crénelé schématisé en 65. Une diode 67 est branchée en aval de l'interrupteur 63 entre les lignes de pôles 55 et 57. Une self-inductance 69 permet de définir le niveau de l'abaissement du signal et une capacité 71 complète le montage, en sortie, branchée entre les pôles 55, 57.

Ainsi, le signal délivré en sortie du redresseur/abaisseur 29 est un signal électrique redressé (DC) et c'est ce signal qui est adressé sur la ligne 39.

Concernant le circuit de commutation 37, la figure 4 en montre un composant essentiel qui peut être un transistor à effet de champs repéré 73. Ce transistor reçoit à son entrée 75 le signal de la ligne 39. Sa seconde entrée 77 est reliée à la ligne 43 de commande (consigne de régulation/commutation) provenant de la carte électronique 17.

Sa sortie 79 délivre le signal commuté vers la ligne 27.

Soit $U_{DC}$, le signal de tension d'entrée reçu par le transistor 73, avant la régulation par le circuit de commutation/régulation 37, soit $U_{RMS}$, le signal de tension de sortie délivré par le circuit 37 vers l'élément chauffant du raccord (voire plus généralement de la ou des pièces à chauffer), et soit $t_1$ et $t_2$ les durées respectivement des phases non passante (off) et passante (on) du commutateur, c'est-à-dire les durées off/on de commutation du signal d'entrée.

Avec un tel signal d'entrée (supposé ici le signal de tension $U_{DC}$), le circuit 37 va donc générer le signal de sortie $U_{RMS}$ entre les bornes de la résistance, avec un rapport cyclique $\alpha$ tel que

$$\alpha = \frac{U_{RMS}^2}{U_{DC}^2} \text{ et } \alpha = \frac{t_2}{t_1 + t_2}$$

ceci sous la cadence de commutation ($t_1$, $t_2$) imposée par le commutateur 73, lequel est, comme on l'a noté, lui-même commandé par les impulsions électriques fournies par la carte électronique 17.

Dès lors que les moyens de mesure (sondes 23, 25 en particulier) ainsi que les règles opératoires propres au soudage des pièces et dont les données sont en l'espèce, au moins en partie, inscrites sur le code 13 ou 13' qui a été lu par le crayon 15 et donc acquis dans la carte électronique 17, influencent le rapport cyclique entre le signal de sortie commuté périodiquement et le signal d'entrée du circuit 37, le signal électrique de sortie (en l'espèce $U_{RMS}$) correspond à un signal en quelque sorte "haché" (c'est-à-dire ayant une valeur susceptible de varier).

La figure 5 illustre schématiquement, pour une période de commutation $\delta$ déterminée (commandée par la carte électronique 17), le signal (supposé en tension) $U_{RMS}$ fourni en sortie.

Le rapport cyclique $\alpha$ est le rapport entre les durées $t_1$ et $t_2$ indiquées sur la figure 5 (avec $\alpha = \frac{t_2}{t_1+t_2}$). Le cadencement et la valeur du signal d'entrée déterminent la fréquence et l'amplitude du signal de sortie.

Comme on peut le constater, on peut obtenir un signal crénelé régulier, si la période des commutations est constante, avec un signal qui pourra être périodiquement nul (phases non passantes du commutateur). Ainsi, en l'espèce, le signal de tension de sortie $U_{RMS}$ évolue en créneaux, périodiquement maximum pendant toute la durée de chaque phase passante du commutateur et nuls entre deux telles phases, lorsque le commutateur devient non passant (off)..

Typiquement, on détermine actuellement pour les machines d'électro-soudage les plus répandues, une plage de tension $U_{RMS}$ comprise entre 8 et 44 volts, la tension dépendant en particulier des conditions opératoires rencontrées sur le terrain et étant donc fonction des relevés de mesure, ou encore de données d'entrée imposées par l'opérateur, via le clavier.

Grâce à l'invention, une telle machine va pouvoir fonctionner à fréquence constante en mode d'alimentation "directe", sans batterie 41, avec utilisation immédiate du courant DC (machine de soudage à "inverteur") ou en mode d'alimentation "indirecte", avec batterie 41 (machine de soudage "sur batterie").

Pour les machines de type "batterie", on stocke l'énergie dans un accumulateur. Une tension "directe" (correspondant à un courant unidirectionnel DC) de $U_{DC}$ = 48 V, est typiquement disponible. Si l'on veut alors réguler une tension de sortie ($U_{RMS}$) à une valeur de 24 V, alors, le rapport cyclique $\underline{\alpha}$ sera de 0,25 et de 0,677 pour une tension de sortie de 39,5 V (autre valeur typique). La fréquence $\underline{f}$ fixe d'utilisation de telles machines est typiquement de l'ordre de 100 Hz.

Pour les machines de type "inverteur", on ne stocke typiquement pas l'énergie dans un accumulateur. Une tension d'entrée dans l'étage de commutation/régulation 37 ($U_{DC}$) de 200 à 250 V (par exemple 230 V) est typiquement disponible. Si l'on veut alors réguler une tension de sortie ($U_{RMS}$) à 24 V, alors le rapport cyclique sera $\alpha$ = 0,0108, et pour 39,5 V, on obtiendra $\alpha$ = 0,0455.

Pour ce type de machine, la fréquence est de l'ordre de 15 à 25 kHz (par exemple 20 kHz), car les composants électroniques de la régulation permettent, en travaillant à une telle fréquence élevée, de réduire l'échauffement et la taille du transformateur (non représenté) intégré alors dans l'étage de régulation/commutation 37.

Mais la machine de l'invention peut aussi assurer un chauffage par induction du raccord 5, avec alors une fréquence de commutation variable. Ces variations dans la fréquence du signal commuté en sortie du circuit de commutation/régulation 37 dépendront de la cadence de commutation des moyens de cadencement 73. Le rapport cyclique sera lui-même, si nécessaire, adaptable ou variable, de l'une des manières que l'on a déjà indiquées (durée des phases passantes/non passantes du transistor ...).

Ainsi, pour des fréquences de découpage du signal DC adaptées (typiquement entre une centaine de kHz et des dizaines de MHz), on va créer un chauffage induit par résonance de l'élément chauffant, à distance, via un champ magnétique. La variation du flux d'induction magnétique traversant l'élément chauffant produira la fusion du raccord avec la pièce à souder. L'élément chauffant peut alors être une grille ou une cage cylindrique creuse, en alliage métallique adapté à la fréquence ou à la gamme de fréquences de vibration sélectionnée.

Pour les machines de type "induction", on ne stocke pas nécessairement l'énergie dans un accumulateur. Typiquement, on choisira d'élever la tension DC d'entrée pour diminuer le courant et la fréquence de régulation. Si l'on veut réguler/commuter un courant (fonction de la tension $U_{RMS}$ et de la charge) le rapport cyclique pourra être calculé comme précédemment. Un point important dans une machine d'electro-soudage dite "à induction" est la fréquence élevée (fonction de l'élément vibratoire appelé ici "élément chauffant") qui se situe entre une centaine de KHz et plusieurs dizaines, voire une centaine, de MHz.

Sur une telle machine, la liaison filaire 27 ne sera plus nécessaire.

Un émetteur 81 la remplacera, qui induira vers l'élément chauffant récepteur le champ magnétique nécessaire, à la fréquence définie (figure 2).

Pour un détail plus complet des éléments constitutifs complémentaires de la machine (mais qui ne font pas partie de la présente invention), on se reportera si nécessaire aux figures 2 et 3 de FR-A-2 572 326

**Revendications**

1. Dispositif d'électro-soudage pour le soudage de deux pièces plastiques (1, 3, 5) entre elles, le dispositif comprenant :

   -- des moyens (32) pour générer un signal électrique et faire circuler un courant AC,
   -- un convertisseur AC/DC (29),
   -- un élément chauffant (6) en liaison avec le convertisseur pour porter la pièces, au moins localement, à une température suffisante pour induire leur soudage par fusion,

   caractérisé en qu'entre le convertisseur (29) et l'élément chauffant (6) sont interposés des moyens régulateurs de tension (37) soumis à la cadence de commutation d'un commutateur (73) pour générer un signal électrique commuté avec un rapport cyclique ($\alpha$) adaptable, tel que

   $$\alpha = \frac{U_{RMS}^2}{U_{DC}^2} \text{ et } \alpha = \frac{t_2}{t_1 + t_2}$$

   avec

   $U_{DC}$ : tension électrique "d'entrée" des moyens régulateur, correspondant à un courant DC,
   $U_{RMS}$ : tension électrique variable "de sortie" des moyens régulateur correspondant au courant délivré vers l'élément chauffant,
   $t_1$ = durée de chaque phase non passante du commutateur (73)
   $t_2$ = durée de chaque phase passante du commutateur (73).

2. Dispositif selon la revendication 1, caractérisé en ce que la tension électrique variable "de sortie" des moyens régulateur (37) est une tension en créneaux, s'annulant périodiquement, à chaque phase non passante ($t_1$) du commutateur (73).

3. Dispositif selon la revendication 1 ou la revendication 2, caractérisé en ce qu'un accumulateur (41) est interposé entre le convertisseur et les moyens régulateurs.

4. Dispositif selon l'une des revendications 1 à 3, caractérisé en ce que la cadence de commutation des moyens de cadencement (73) est variable, de manière à rendre variable la fréquence du signal commuté délivré vers l'élément chauffant (6), et induire ainsi un chauffage par induction.

FIG_1

FIG.2

FIG.5

7

FIG.3

FIG.4